# EUROPEAN PATENT APPLICATION

(11) **EP 4 769 163 A1**
(43) Date of publication of application: **01.07.2026**
(21) Application number: 25218894.1
(22) Date of filing: 27.11.2025
(51) Int. Cl.: G06F 13/16

(54) **MEMORY CONTROLLER, MEMORY DEVICE AND MEMORY SYSTEM**

(30) Priority: 27.12.2024 KR 20240197826
(71) Applicant: SK hynix Inc., Bubal-eub Icheon-si Gyeonggi-do 17336 (KR)
(72) Inventor: SHIN, Kwang Sik, 17336 Icheon-si, Gyeonggi-do (KR)
(74) Representative: Isarpatent

(57) **Abstract**

Memory controllers, memory devices, and memory systems are disclosed. In an embodiments, a memory system includes a memory device configured to provide a data processing function such as a computational function. In the memory system, during at least a part of a period in which some ranks among N ranks sharing a data channel perform a computational operation, at least one of the remaining ranks performs a general memory operation such as a write or read operation, allowing the memory system to reduce delays in the general memory operation while still providing the computational operation.

## Description

### TECHNICAL FIELD

Various embodiments of the disclosed technology relate to a memory controller, a memory device and a memory system.

### BACKGROUND

A memory device may include a plurality of memory cells for data storage. For example, the memory device may store data or provide previously stored data to the host device in response to a command from a host device.

The host device may perform computations using data stored in the memory device and generate a data processing result based on those computations. As the computational workload of the host device increases, the volume of data transferred between the host device and the memory device may also increase.

As the volume of data transferred between the host device and the memory device increases, the operational performance of the memory device or the overall computing system including the memory device and the host device may decline.

### SUMMARY

The disclosed technology can be implemented in some embodiments to address issues that are mentioned in this patent document, as well as other issues not explicitly stated herein.

The disclosed technology can be implemented in some embodiments to enable a memory device to perform computational functions while enhancing its operational efficiency during computation.

**In** an embodiment, a memory system may include: a memory device including a plurality of ranks, each of the plurality of ranks including at least one bank including a memory cell array to store data and a computational logic circuit to perform data processing; and a memory controller configured to control operations of the plurality of ranks based on a command waiting in a command queue for each of the plurality of ranks, wherein, during at least a part of a first period in which, among N ranks (N is an integer satisfying N ≥ 2) sharing a data channel, P ranks (P is an integer satisfying N > P ≥ 1) operate in response to a first command, at least one of (N-P) ranks to operate in response to a second command without utilizing the computational logic circuit.

In an embodiment, a memory controller may include: at least one command queue configured to store a first command and a second command for each of a plurality of ranks in one or more memory devices; and a scheduler configured to schedule a command to be performed by each of the plurality of ranks during a preset operation period, based on a number of first commands and a number of second commands, and, when there is at least one second command, while an operation in response to the first command is being performed by one part of the plurality of ranks, schedule an operation to be performed by at least one of the other part of the plurality of ranks in response to the second command.

In an embodiment, a memory device may include: a first rank including a plurality of first banks each including a first memory cell array and a first computational logic circuit that performs a computational using the first memory cell array; and a second rank including a plurality of second banks each including a second memory cell array and a second computational logic circuit that performs a computational using the second memory cell array, wherein the first rank and the second rank share a data channel, and, during a first period in which the first computational logic circuit included in the first rank operates, a program operation or a read operation on the second memory cell array is performed without utilizing the second computational logic circuit included in the second rank.

In an embodiment, a memory device may include: a first memory chip including a plurality of first banks each including a first memory cell array and a first computational logic circuit to perform a computational using the first memory cell array; and a second memory chip including a plurality of second banks each including a second memory cell array and a second computational logic circuit to perform a computational using the second memory cell array, wherein during a first period, the first computational logic circuit included in a first group of the plurality of first banks and the second computational logic circuit included in a first group of the plurality of second banks operate, and the first computational logic circuit included in a second group of the plurality of first banks and the second computational logic circuit included in a second group of the plurality of second banks do not operate.

In an embodiment, a memory device may include: a first memory chip including a plurality of first banks each including a first memory cell array and a first computational logic circuit that performs a computational using the first memory cell array; and a second memory chip including a plurality of second banks each including a second memory cell array, wherein during at least a part of a first period in which the first computational logic circuit included in a first group of the plurality of first banks operates, a program operation or a read operation is performed on a first group of the plurality of second banks.

Based on some embodiments of the disclosed technology, data processing performance using a memory device may be improved by the computational function of the memory device, and the operational performance of the memory device may be improved through scheduling an operation of the memory device during a period in which the computational function of the memory device is performed.

Effects of the embodiments of the disclosed technology are not limited to those mentioned above, and other effects not mentioned will be clearly understood by those skilled in the art from the description of claims.

### BRIEF DESCRIPTION OF THE DRAWINGS

FIG. 1 is a diagram illustrating an example of a memory system based on some embodiments of the disclosed technology.
FIG. 2 is a diagram illustrating an example of a memory device within a memory system based on some embodiments of the disclosed technology.
FIG. 3 is a diagram illustrating an example of a memory device within a memory system based on some embodiments of the disclosed technology.
FIGS. 4-5 are diagrams illustrating examples of operating schemes of the memory system illustrated in FIG. 3.
FIGS. 6-7 are diagrams illustrating examples of operation timings of the memory system illustrated in FIG. 3.
FIG. 8 is a diagram illustrating an example of an operating scheme of a memory system based on some embodiments of the disclosed technology.
FIGS. 9A, 9B, and 10 are diagrams illustrating examples of operating schemes for various types of memory systems based on some embodiments of the disclosed technology.

### DETAILED DESCRIPTION

Hereinafter, various embodiments of the disclosed technology will be described in detail with reference to accompanying drawings.

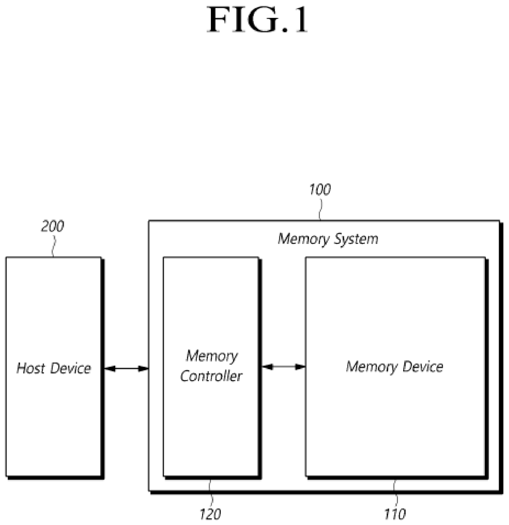

FIG. 1 is a diagram illustrating an example of a memory system 100 based on some embodiments of the disclosed technology.

Referring to FIG. 1, the memory system 100 according to the embodiments of the disclosed technology may include at least one memory device 110. The memory system 100 may include a memory controller 120 that controls the operation of the memory device 110.

The memory device 110 may be, for example, volatile memory such as DRAM (for example SDRAM, (e.g., DDR SDRAM or LPDDR SDRAM)), but embodiments of the disclosed technology are not limited thereto. The memory device 110 may be nonvolatile memory such as NAND flash memory, 3D NAND flash memory or NOR flash memory. In some implementations, one part of the memory device 110 included in the memory system 100 may be volatile memory, and the other part may be nonvolatile memory.

The memory device 110 may be one of various types of memory such as resistive RAM, phase change memory, magnetoresistive memory, ferroelectric memory or spin transfer torque memory.

In some embodiments, the memory device 110 may be a processing-in-memory (PIM) that includes a computational function and/or data processing function. In some implementations, the PIM is a computer architecture where data operations, such as computational and/or data processing operations, are performed directly on the memory that stores data, rather than requiring data to be transferred to a separate data processing unit first, improving speed and efficiency. A component that performs a computational function in the memory device 110 may be located inside or outside a memory bank in the memory device 110. When the component that performs a computational function is located outside a memory bank in the memory device 110, it may be located adjacent to the memory bank in the memory device 110or may be located in a separate area spaced apart from the memory bank in the memory device 110. In some embodiments of the disclosed technology, the memory device 110 may also be referred to as "memory chip" or simply "memory."

Th**e** memory controller 120 may control the operation of the memory device 110 in response to a command received from an external device. The memory controller 120 may control the operation of the memory device 110 based on commands it generates independently, without receiving commands from an external device.

The memory controller 120 may transmit to the memory device 110 a command, an address, data, etc. to control the operation of the memory device 110. A physical layer for transmitting and receiving signals may be located outside or inside the memory controller 120. The memory controller 120 may include various logic circuits that perform various functions, and may be implemented as a single chip. In some implementations, at least a part of the various logic circuits may be implemented as a chiplet. The memory controller 120 may control operations such as writing data to the memory device 110. The memory controller 120 may control the operation of reading data written to the memory device 110.

In the case where the memory device 110 is a specific type of memory device, such as a particular nonvolatile memory device, the memory controller 120 may control a refresh operation or an erase operation on the data written to the memory device 110.

The memory controller 120 may perform error detection and/or correction operations to detect and/or correct errors in data read from the memory device 110. In some implementations, the error correction operation may be performed inside the memory device 110. For example, the error correction operation may be performed by logic circuits inside the memory device 110.

The memory controller 120 may control the operation of the memory device 110 based on a command received from an external host device 200.

For example, the host device 200 may be a computer, an ultra mobile PC (UMPC), a workstation, a personal digital assistant (PDA), a tablet, a mobile phone, a smartphone, an e-book, a portable multimedia player (PMP), a portable game player, a navigation device, a black box, a digital camera, a digital multimedia broadcasting (DMB) player, a smart television, a digital audio recorder, a digital audio player, a digital picture recorder, a digital picture player, a digital video recorder, a digital video player, a storage configuring a data center, one of various electronic devices configuring a home network, one of various electronic devices configuring a telematics network, a radio frequency identification (RFID) device, a mobility device (e.g., a vehicle, a robot or a drone) capable of traveling under human control or autonomous driving, etc. Alternatively, the host device 200 may be a virtual/augmented reality device that provides a 2D or 3D virtual reality image or augmented reality image. In addition to the examples described above, the host device 200 may be any one of various electronic devices that require the memory system 100 capable of storing data for data processing. In addition, the host device 200 may be a processor such as a central processing unit (CPU), a graphics processing unit (GPU), a neural processing unit (NPU) and a tensor processing unit (TPU), but is not limited thereto. The host device 200 and the memory system 100 may be collectively referred to as a computing system. The computing system may include at least one memory system 100 that is disposed around the host device 200, and may further include at least one data storage device other than the memory system 100.

The host device 200 may include at least one operating system. The operating system may manage and control the overall functions and operations of the host device 200, and may control the interaction between the host device 200 and the memory system 100. The operating system may be classified as a general operating system or a mobile operating system depending on the mobility of the host device 200.

In an implementation, the memory controller 120 and the host device 200 may be separate devices. In another implementation, the memory controller 120 and the host device 200 may be incorporated into a single device. In an implementation, all functions of the memory controller 120 may incorporated into the host device 200. In another implementation, some of the functions of the memory controller 120 may be incorporated into the host device 200. For the sake of explanation, the following description assumes that the memory controller 120 and the host device 200 are devices are separate devices. For example, an example will be provided where the memory controller 120 is disposed inside the memory system 100. However, this is merely an example, and the embodiments of the disclosed technology are not limited thereto.

The memory system 100 based on some embodiments of the disclosed technology may perform part of a computational function on behalf of the host device 200, and may provide a computational result to the host device 200. The memory system 100 may include at least one memory device 110 that provides a computational function. The memory controller 120 may control whether part of the computational function is executed by the memory device 110, as well as the timing of its execution. By providing computational functionality through the memory system 100, the operational performance of a computing system that performs data processing using the memory system 100 may be improved.

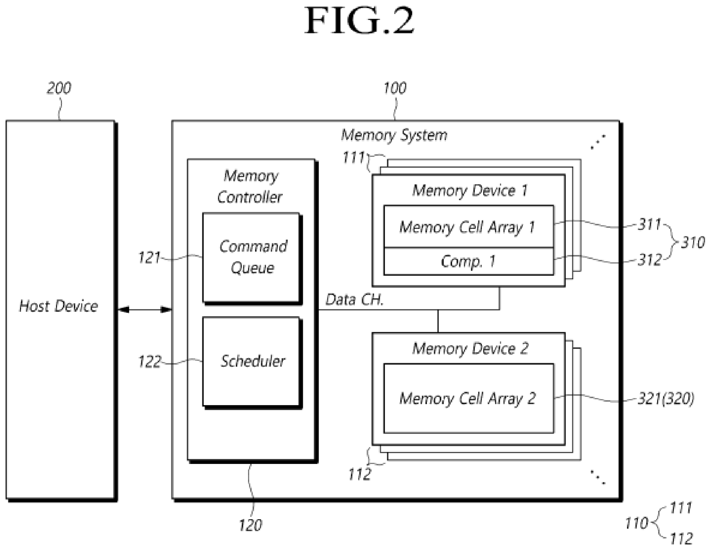

FIG. 2 is a diagram illustrating an example of a memory device 110 within a memory system 100 based on some embodiments of the disclosed technology.

Referring to FIG. 2, the memory system 100 may include the memory device 110 and a memory controller 120.

The memory system 100 may include, for example, a first memory device 111 and a second memory device 112.

The first memory device 111 may include a plurality of first banks 310 of memory. Each of the plurality of first banks 310 may include a first memory cell array 311 of first memory cells and a first computational logic circuit 312. Although a case where the first computational logic circuit 312 is located inside the first bank 310 is illustrated as an example, embodiments of the disclosed technology may also be applied to a case where the first computational logic circuit 312 is located outside the first bank 310.

The second memory device 112 may include a plurality of second banks 320 of memory. Each of the plurality of second banks 320 may include a second memory cell array 321 of second memory cells. Each of the plurality of second banks 320 may include a circuit for the operation of the second memory cell array 321.

In some embodiments, the memory system 100 may include a memory device 110 that provides a computational functionality, such as the first memory device 111, and may also include a memory device 110 that does not provide a computational functionality, such as the second memory device 112. At least one first memory device 111 and at least one second memory device 112 may be included in the memory system 100. In some embodiments, only a memory device 110 that provides a computational functionality, such as the first memory device 111, may be included in the memory system 100.

To ensure efficient operations of the first memory device 111 and the second memory device 112, the memory system 100 may schedule commands processed by the first memory device 111 and the second memory device 112 and control operations of the first memory device 111 and the second memory device 112.

For example, the memory controller 120 of the memory system 100 may include a command queue 121 and a scheduler 122. The command queue 121 may store, for example, commands received from a host device 200. The command queue 121 may store all commands in sequence, or may store, in sequence, pending commands for each memory device 110.

The scheduler 122 may control, based on commands stored in the command queue 121, the types and sequences of commands to be processed by the first memory device 111 and the second memory device 112.

For example, the first memory device 111 may share a data channel with the second memory device 112. The scheduler 122 may control command processing operations by the first memory device 111 and the second memory device 112 that share the data channel. The scheduler 122 may control the operations of the first memory device 111 and the second memory device 112 according to commands stored in the command queue 121.

The scheduler 122 may control the first memory device 111 to perform an operation using the first computational logic circuit 312 based on a command stored in the command queue 121. During at least a part of the period in which an operation by the first computational logic circuit 312 of the first memory device 111 is performed, the scheduler 122 may control an operation of writing data to the second memory device 112 or reading data written to the second memory device 112.

The scheduler 122 may perform an operation of writing data to the first memory device 111 or reading data written to the first memory device 111 based on the waiting queue of commands stored in the command queue 121. The scheduler 122 may control a write or read operation on the first memory device 111 to be performed based on the waiting queue of commands for the first memory device 111 and commands for the second memory device 112.

While controlling the operation sequence of the first memory device 111 and the second memory device 112 based on the type, sequence and number of pending commands in the first memory device 111 and the second memory device 112 that share the data channel, the scheduler 122 may improve the command processing performance of both the first memory device 111 and the second memory device 112.

As described in the example above, the memory system 100 may include a memory device 110 that provides a computational function and a memory device 110 that does not provide a computational function. In another implementation, all the memory devices 110 in the memory system 100 may provide computational functions. Even in this case, the scheduler 122 of the memory controller 120 can improve the operational efficiency of the memory system 100 by controlling the operations of the memory devices 110 that share a data channel.

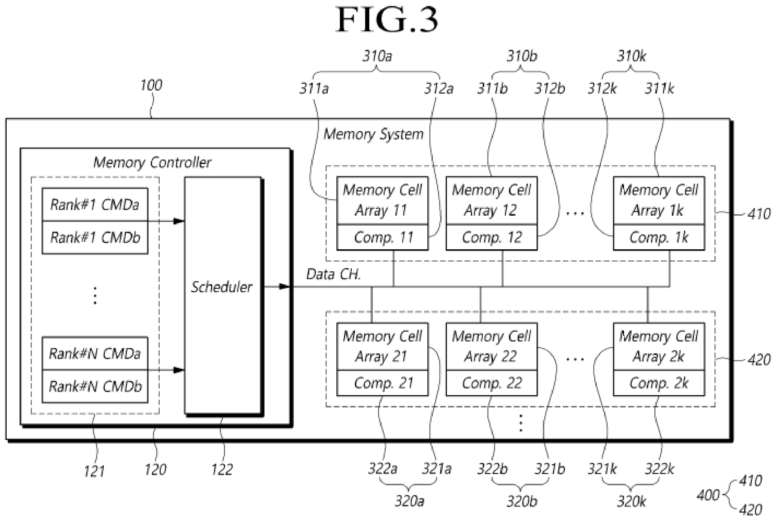

FIG. 3 is a diagram illustrating an example of a memory device 110 within a memory system 100 based on some embodiments of the disclosed technology.

Referring to FIG. 3, the memory system 100 may include at least one memory device 110. The memory system 100 may include a memory controller 120 that controls the operation of the at least one memory device 110.

The at least one memory device 110 may include one rank or may be divided into a plurality of ranks 400 (e.g., 410, 420). The rank 400 may refer to a unit that operates under the control of the memory controller 120. For example, the rank 400 may include a group of memory chips that operate independently within a memory system or are accessed simultaneously. For example, a group of memory devices 110 may constitute a single rank 400. In some implementations, the rank 400 may be a region of the memory device 110. In some implementations, the rank 400 may include the corresponding regions of a plurality of memory devices 110. In some embodiments where two or more different ranks of memory are provided, providing memory operation commands on a rank basis may allow the memory controller to enable one rank to execute computation or data processing by logic circuits in memory banks or memory devices belonging to the rank, while memory banks or memory devices belonging to another rank may be controlled to perform general memory operations, such as read or write operations.

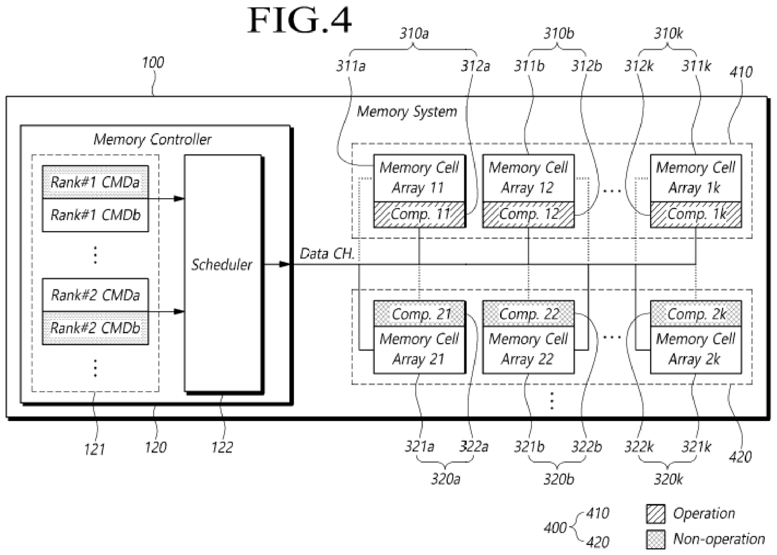

In the example in FIG. 3, the memory system 100 may include an example 400 with a first rank 410 and a second rank 420. The first rank 410 may share a data channel with the second rank 420. The example 400 with the two ranks 410 and 420 illustrated in FIG.4 for the memory system 100 is an example of one particular implementations, but the number of ranks 400 included in the memory system 100 may vary based on the needs of the memory system 100 in specific applications.

The first rank 410 may include a plurality of first banks 310a, 310b, ..., 310k. The plurality of first banks 310a, 310b, ..., 310k may be included in the same memory device 110. Alternatively, each of the plurality of first banks 310a, 310b, ..., 310k may be included in a separate memory device 110.

The plurality of first banks 310a, 310b, ..., 310k may include first memory cell arrays 311a, 311b, ..., 311k and first computational logic circuits 312a, 312b, ..., 312k, respectively. The first computational logic circuits 312a, 312b, ..., 312k may be located inside the plurality of first banks 310a, 310b, ..., 310k or, in some implementations, may be located outside the plurality of first banks 310a, 310b, ..., 310k.

The second rank 420 may include a plurality of second banks 320a, 320b, ..., 320k. The plurality of second banks 320a, 320b, ..., 320k may be included in the same memory device 110 or in different memory devices 110. At least the corresponding regions of the plurality of second banks 320a, 320b, ..., 320k may be included in the same memory device 110 as the corresponding regions of the plurality of first banks 310a, 310b, ..., 310k. For example, the first bank 310a and the second bank 320a may be included in the same memory device 110.

The plurality of second banks 320a, 320b, ..., 320k may include second memory cell arrays 321a, 321b, ..., 321k and second computational logic circuits 322a, 322b, ..., 322k, respectively. In an implementation, the second computational logic circuits 322a, 322b, ..., 322k may be located inside the plurality of second banks 320a, 320b, ..., 320k, respectively. In another implementation, the second computational logic circuits 322a, 322b, ..., 322k may be located outside the plurality of second banks 320a, 320b, ..., 320k.

The memory controller 120 may include a command queue 121 and a scheduler 122. The command queue 121 may store commands for each rank 400.

For example, the command queue 121 may store a first command CMDa and a second command CMDb that are pending for the first rank 410 (e.g., Rank #1 CMDa, Rank #1 CMDb). The command queue 121 may store a first command CMDa and a second command CMDb that are pending for the second rank 420 (e.g., Rank #2 CMDa, Rank #2 CMDb). The number and types of commands stored in the command queue 121 may vary.

The first command CMDa may be, for example, a command that requires the operation of a computational logic circuit included in each rank 400 (or a rank that includes a computational logic circuit). In an operation that is performed in response to the first command CMDa, a first computational logic circuit 312 included in the first rank 410 may operate, or a second computational logic circuit 322 included in the second rank 420 may operate. The first command CMDa may be referred to as a computation command, and an operation that is performed in response to the first command CMDa may be referred to as a computational operation.

A computational logic circuit may perform a computation using data stored in a memory cell array in response to a specific command. For example, the computational logic circuit may read data stored in at least a region of the memory cell array, and may perform a computation on the read data. The computational logic circuit may store data according to a computation result in the memory cell array.

The second command CMDb may be, for example, a command that does not require the operation of a computational logic circuit included in each rank 400. The second command CMDb may be a command that instructs writing data to a memory cell array included in each rank 400 or reading data written to the memory cell array. The second command CMDb may include a command other than those that require the operation of a computational logic circuit. The second command CMDb may be referred to as a general memory command, and an operation according to the second command CMDb may be referred to as a general memory operation.

In response to the second command CMDb, the first rank 410 or the second rank 420 may perform an operation of writing data to a memory cell array included in each rank 400 or an operation of reading data written to the memory cell array. While an operation according to the second command CMDb is performed, a computational logic circuit included in each rank 400 does not operate.

The scheduler 122 of the memory controller 120 may set a command to be processed by each rank 400 based on the types, sequence and number of commands waiting in the command queue 121 for each rank 400. The scheduler 122 may set a command to be processed by the first rank 410 and a command to be processed by the second rank 420 every preset cycle.

For example, when the number of second commands CMDb stored in the command queue 121 is greater than 0, the scheduler 122 may control at least one of a plurality of ranks 400 to operate according to the second command CMDb.

During at least a part of the period in which, among N ranks 400 (N is an integer satisfying N ≥ 2) sharing a data channel, P ranks 400 (P is an integer satisfying N > P ≥ 1) operate according to the first command CMDa, the scheduler 122 may control at least one of (N-P) ranks 400 to operate according to the second command CMDb.

For instance, in the example illustrated in FIG. 3, during at least a part of the period in which the first rank 410 operates according to the first command CMDa, the scheduler 122 may control the second rank 420 to operate according to the second command CMDb. Among ranks that share a data channel, during the same period, the first rank 410 may operate according to the first command CMDa and the second rank 420 may operate according to the second command CMDb.

When the number of second commands CMDb stored in the command queue 121 is 0, the scheduler 122 may control all of the plurality of ranks 400 to operate according to the first command CMDa.

Even if the number of second commands CMDb stored in the command queue 121 is greater than 0, when the waiting time of the first command CMDa stored in the command queue 121 is longer than a preset threshold time, the scheduler 122 may control all of the plurality of ranks 400 to perform operations according to the first command CMDa.

Because the scheduler 122 controls the operations of the first rank 410 and the second rank 420, which share the data channel, based on the commands stored in the command queue 121, the computational operation of the memory device 110 that includes a computational logic circuit may be efficiently performed. In addition, while some ranks 400 that share a data channel perform a computational operation, write or read operations for other ranks can be simultaneously performed, thereby preventing or reducing delays in the write or read operations caused by providing the computational functionality.

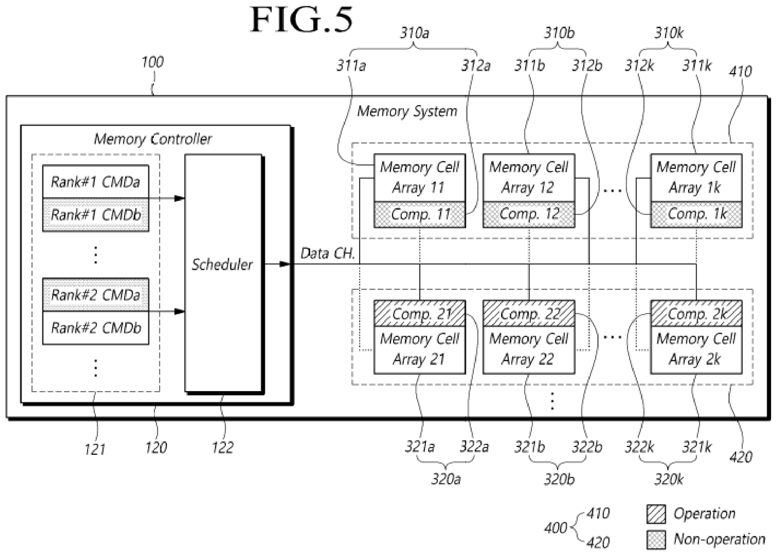

**FIG.** 4 and FIG. 5 are diagrams illustrating examples of operating schemes of the memory system 100 illustrated in FIG. 3.

Referring to FIG. 4, the memory controller 120 may check the types, sequence and number of commands stored in the command queue 121. A first command CMDa and a second command CMDb may be stored in a command queue for the first rank 410. A first command CMDa and a second command CMDb may be stored in a command queue for the second rank 420.

Commands waiting for each rank 400 may be divided into the first command CMDa that requires the operation of a computational logic circuit and the second command CMDb that does not require the operation of a computational logic circuit. The number of commands waiting for each rank 400 may be three or more.

Because the number of second commands CMDb stored in the command queue 121 is greater than 0 (there is at least one second command CMDb stored in the command queue 121), the memory controller 120 may set at least one rank 400 that will perform an operation according to the second command CMDb, among a plurality of ranks 400 that share a data channel.

For example, the memory controller 120 may set the second rank 420 to operate according to the second command CMDb during a preset operation period. During the preset operation period, the memory controller 120 may set the first rank 410, which shares a data channel with the second rank 420, to operate according to the first command CMDa.

During a preset operating period, the second rank 420 may operate according to the second command CMDb during at least a partial period of a period in which the first rank 410 operates according to the first command CMDa.

Because the first rank 410 operates according to the first command CMDa, the first computational logic circuits 312a, 312b, ..., 312k included in the first banks 310a, 310b, ..., 310k of the first rank 410 may operate. Because the second rank 420 operates according to the second command CMDb, the second computational logic circuits 322a, 322b, ..., 322k included in the second banks 320a, 320b, ..., 320k of the second rank 420 may not operate. Data may be written to at least a part of the second memory cell arrays 321a, 321b, ..., 321k included in the second banks 320a, 320b, ..., 320k, or a read operation on written data may be performed.

During a period in which a computational function by a rank 400 is performed, a write or read operation on a rank 400 that shares a data channel with the rank 400 is performed. Therefore, it is possible to prevent the performance of a write or read operation on data from deteriorating due to performing of the computational function.

The memory controller 120 may set an operating state of each rank 400 every cycle corresponding to the length of a preset operation period.

For example, referring to FIG. 5, after the operation period illustrated in FIG. 4 ends, the memory controller 120 may set the operations of the first rank 410 and the second rank 420 in a next operation period.

**When** a computational operation by the first rank 410 and a general memory operation on the second rank 420 are finished, the memory controller 120 may set the operations of the first rank 410 and the second rank 420 based on commands stored in the command queue 121.

The memory controller 120 may control at least a part of the first banks 310a, 310b, ..., 310k included in the first rank 410 to operate according to the second command CMDb. The first computational logic circuits 312a, 312b, ..., 312k included in the first banks 310a, 310b, ..., 310k may not operate. Data may be written to the first memory cell arrays 311a, 311b, ..., 311k included in the first banks 310a, 310b, ..., 310k, or a read operation on written data may be performed.

The memory controller 120 may control at least a part of the second banks 320a, 320b, ..., 320k included in the second rank 420 to operate according to the first command CMDa. The second computational logic circuits 322a, 322b, ..., 322k included in the second banks 320a, 320b, ..., 320k may operate.

A computation may be performed by the second computational logic circuits 322a, 322b, ..., 322k while data written to the second memory cell arrays 321a, 321b, ..., 321k is read, and result data according to the computation by the second computational logic circuits 322a, 322b, ..., 322k may be written to the second memory cell arrays 321a, 321b, ..., 321k.

During at least a partial period of a period in which, among the first rank 410 and the second rank 420 that share a data channel, the second rank 420 performs a computational operation, the first rank 410 may perform a general memory operation.

A computational function by a rank 400 that includes a computational logic circuit may be provided. At the same time, because a general memory operation is performed by a rank 400 that does not perform a computational operation, it is possible to prevent the general memory operation from being delayed due to performing of the computational operation. A degree by which a rank 400 that performs a computational operation uses a data channel may be substantially low. As the data channel is used by a rank 400 that performs a general memory operation, the usage efficiency of the data channel may increase.

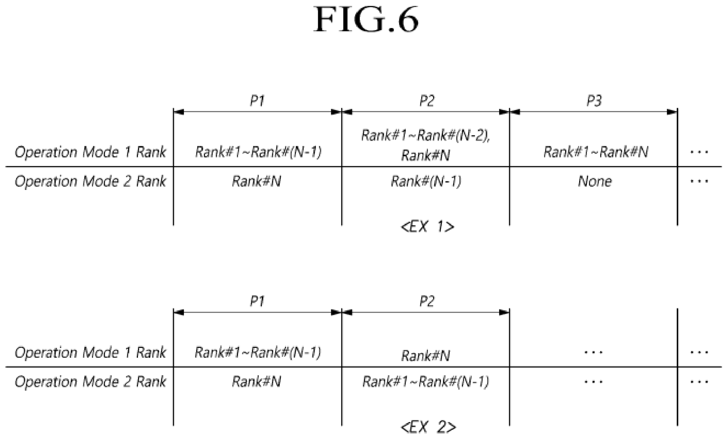

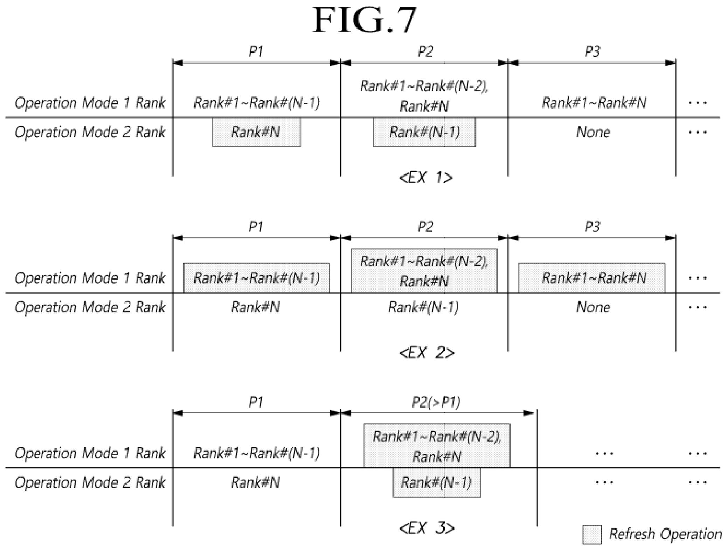

FIG. 6 and FIG. 7 are diagrams illustrating examples of operation timings of the memory system 100 illustrated in FIG. 3.

Referring to FIG. 6, banks included in a plurality of memory devices 110 of the memory system 100 may constitute a plurality of ranks 400. Among the plurality of ranks 400 included in the memory system 100, N ranks 400 may share a data channel.

The memory controller 120 may schedule operation modes of the N ranks 400 that share the data channel, based on commands waiting for the respective ranks 400.

For example, the memory controller 120 may set a rank 400 that is to perform a computational operation, among the N ranks 400. A rank 400 that performs a computational operation may be referred to as a rank 400 that operates in a first operation mode. The memory controller 120 may set a rank 400 that is to perform a general memory operation, among the N ranks 400. A rank 400 that performs a general memory operation may be referred to as a rank 400 that operates in a second operation mode.

Referring to <EX 1> of FIG. 6, during a first period P1, the memory controller 120 may set ranks 400 of #1 to #N-1 among the N ranks 400 to operate according to the first operation mode. Computational logic circuits included in the ranks 400 of #1 to #N-1 may operate. A computational function may be performed by the ranks 400 of #1 to #N-1.

During the first period P1, the memory controller 120 may set a rank 400 of #N among the N ranks 400 to operate according to the second operation mode. A computational logic circuit included in the rank 400 of #N may not operate. A general memory operation may be performed by the rank 400 of #N.

The memory controller 120 may transmit and receive the second command CMDb for the second operation mode and data according to the second command CMDb during a period other than a period in which the first command CMDa for the first operation mode is transmitted through a data channel shared by the N ranks 400. For example, during each period, the memory controller 120 may transmit the first command CMDa to a corresponding rank 400 through the data channel, and then, may transmit and receive the second command CMDb and data according to the second command CMDb.

When the second command CMDb is included in commands waiting for the rank 400 of #N, the memory controller 120 may control the rank 400 of #N to perform a general memory operation. In addition, when the waiting time of the second command CMDb waiting for the rank 400 of #N among second commands CMDb waiting for the respective ranks 400 is longest, the memory controller 120 may control the rank 400 of #N to operate according to the second command CMDb.

The memory controller 120 may set ranks 400 to operate according to the first operation mode and the second operation mode every cycle.

The memory controller 120 may set operation modes of the respective ranks 400 in a second period P2 after the first period P1. In response to commands waiting for the respective ranks 400 during the first period P1, the memory controller 120 may set operation modes of the ranks 400 in the second period P2.

During the second period P2, the memory controller 120 may set the ranks 400 of #1 to #N-2 and the rank 400 of #N to operate according to the first operation mode. The computational logic circuits included in the ranks 400 of #1 to #N-2 and the rank 400 of #N may operate, and a computational function may be performed.

During the second period P2, the memory controller 120 may set the rank 400 of #N-1 to operate according to the second operation mode. The computational logic circuit included in the rank 400 of #N-1 may not operate. A general memory operation may be performed by the rank 400 of #N-1.

At least one of ranks 400 that operate according to the first command CMDa during the first period P1 may operate according to the second command CMDb during the second period P2. A rank 400 that operates according to the second command CMDb during the second period P2 may be different from a rank 400 that operates according to the second command CMDb during the first period P1.

In response to commands waiting for the respective ranks 400 during the second period P2, the memory controller 120 may set operation modes of the respective ranks 400 in a third period P3.

When the number of second commands CMDb waiting for the respective ranks 400 during the second period P2 is 0, the memory controller 120 may control all of the N ranks 400 that share the data channel, to operate according to the first operation mode during the third period P3. During the third period P3, computational operations may be performed by the N ranks 400. In response to commands waiting for the respective ranks 400, the memory controller 120 may set operation modes of the respective ranks 400 in a next cycle.

In some implementations, the memory controller 120 may control a plurality of ranks 400 to operate in the second operation mode during each period.

For example, referring to <EX 2> of FIG. 6, during a first period P1, the ranks 400 of #1 to #N-1 may operate according to the first operation mode. During the first period P1, the rank 400 of #N may operate according to the second operation mode.

During a second period P2 after the first period P1, the rank 400 of #N may operate according to the first operation mode. During the second period P2, the ranks 400 of #1 to #N-1 may operate according to the second operation mode.

When the number of first commands CMDa waiting for the respective ranks 400 is small or the number of second commands CMDb waiting for the respective ranks 400 is large, the memory controller 120 may control at least two ranks 400 to operate according to the second operation mode. The memory controller 120 may control a rank 400 for which the waiting time of the second command CMDb is longest among the ranks 400 of #1 to #N-1, to perform an operation according to the second command CMDb. Alternatively, the memory controller 120 may control at least two ranks 400 among the ranks 400 of #1 to #N-1 to perform general memory operations during time-divided periods of the second period P2.

The memory controller 120 may schedule operation modes of the ranks 400 based on a shared state of a data channel and waiting commands, and may set an operation mode of each rank 400 based on the types, states and waiting times of waiting commands. For example, in a case where the waiting time of the first command CMDa requiring the operation of a computational logic circuit exceeds a preset threshold time (e.g., a time corresponding to two cycles), even when the second command CMDb exists in the command queue 121, the memory controller 120 may control all of the ranks 400 to process first commands CMDa.

In this way, the memory controller 120 may efficiently control the operation of a rank including a computational logic circuit based on commands waiting for each rank 400, and may control a refresh operation on each rank 400 based on an operation mode.

For example, referring to <EX 1> of FIG. 7, among N ranks 400 that share a data channel, the memory controller 120 may set ranks 400 to operate in the first operation mode and a rank 400 to operate in the second operation mode.

The memory controller 120 may control a refresh operation to be performed for a rank 400 that operates in the second operation mode in each cycle. For example, during a first period P1, a rank 400 of #N may operate according to the second operation mode, and a refresh operation may be performed for banks included in the rank 400 of #N during a partial period of the first period P1. Even when the memory system 100 includes banks in which a computational operation by computational logic circuits is performed, a refresh operation may be performed during a period in which a general memory operation such as a write operation or a read operation is performed.

For another example, referring to <EX 2> of FIG. 7, in each cycle, the memory controller 120 may control a refresh operation to be performed for a rank 400 that operates in the first operation mode. When a computational operation by a rank 400 that operates in the first operation mode is completed, the memory controller 120 may control a refresh operation to be performed for all of the banks included in the corresponding rank 400. The computational operation and the refresh operation may be consecutively performed.

In some implementations, a refresh operation may be performed simultaneously for a rank 400 that operates in the first operation mode and a rank 400 that operates in the second operation mode.

In addition, in some implementations, the length of a period in which a refresh operation is performed may be variably adjusted.

For example, referring to <EX 3> of FIG. 7, during a first period P1, N-1 ranks 400 may operate according to the first operation mode, and one rank 400 may operate according to the second operation mode. In response to commands waiting for the respective ranks 400 during the first period P1, the memory controller 120 may set operation modes of the respective ranks 400 in a second period P2.

The memory controller 120 may control a refresh operation on the respective ranks 400 to be performed during the second period P2. The memory controller 120 may set a refresh operation to be performed after a computational operation or a general memory operation on each rank 400 is completed. The memory controller 120 may set the length of the second period P2 in which the refresh operation is performed, to be different from the length of the first period P1. The length of the second period P2 may be longer than the length of the first period P1. By increasing the length of a period in which a refresh operation is performed, the memory controller 120 may control the refresh operation to be performed after a computational operation or a general memory operation on each rank 400 is completed.

The memory controller 120 may control the operation modes or refresh operation execution methods of respective ranks 400 sharing a data channel based on commands waiting for the respective ranks 400, and may independently control the operations of the ranks 400 for each data channel.

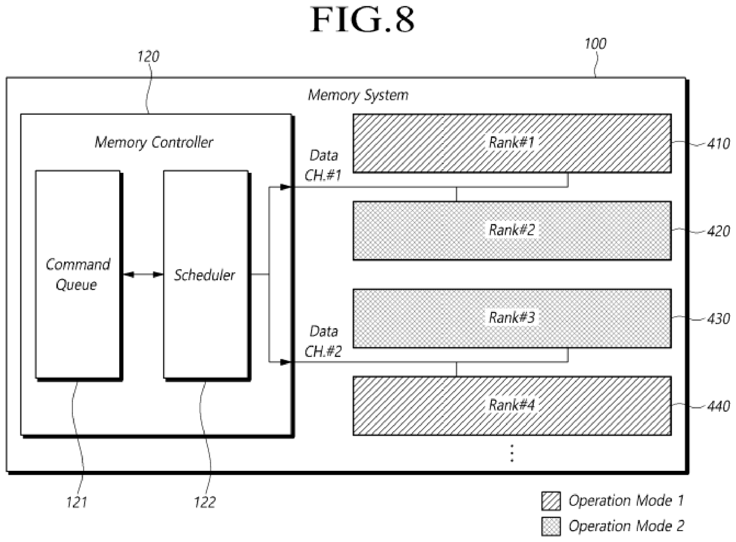

FIG. 8 is a diagram illustrating an example of an operating scheme of a memory system 100 based on some embodiments of the disclosed technology.

Referring to FIG. 8, the memory system 100 may include a first rank 410 and a second rank 420 that share a first data channel. The memory system 100 may include a third rank 430 and a fourth rank 440 that share a second data channel.

The memory controller 120 may control operation modes of the first rank 410 and the second rank 420 according to commands waiting for the first rank 410 and the second rank 420 sharing the first data channel. The memory controller 120 may control operation modes of the third rank 430 and the fourth rank 440 according to commands waiting for the third rank 430 and the fourth rank 440 sharing the second data channel.

For example, the memory controller 120 may control the first rank 410 and the fourth rank 440 to operate according to a first operation mode during the same operation period. Computational operations may be performed while computational logic circuits included in the first rank 410 and the fourth rank 440 operate.

During a period in which the first rank 410 and the fourth rank 440 operate according to the first operation mode, the memory controller 120 may control the second rank 420 and the third rank 430 to operate according to a second operation mode. Computational logic circuits included in the second rank 420 and the third rank 430 may not operate. General memory operations may be performed by the second rank 420 and the third rank 430.

Alternatively, during the same operation period, with the first rank 410 and the second rank 420 sharing the first data channel, the memory controller 120 may control the first rank 410 to operate according to the first operation mode and the second rank 420 to operate according to the second operation mode. During the corresponding period, the memory controller 120 may control both the third rank 430 and the fourth rank 440 sharing the second data channel to operate according to the first operation mode.

Depending on states of commands waiting for each data channel, the memory controller 120 may set the operation mode of each of a plurality of ranks 400 sharing each data channel every cycle, thereby increasing the efficiency of a computational operation and a general memory operation.

Even when the types and connection structures of memory devices 110 included in a memory system 100 are implemented in various ways, a memory controller 120 may control operation modes of respective ranks 400 every cycle based on commands waiting for the respective ranks 400.

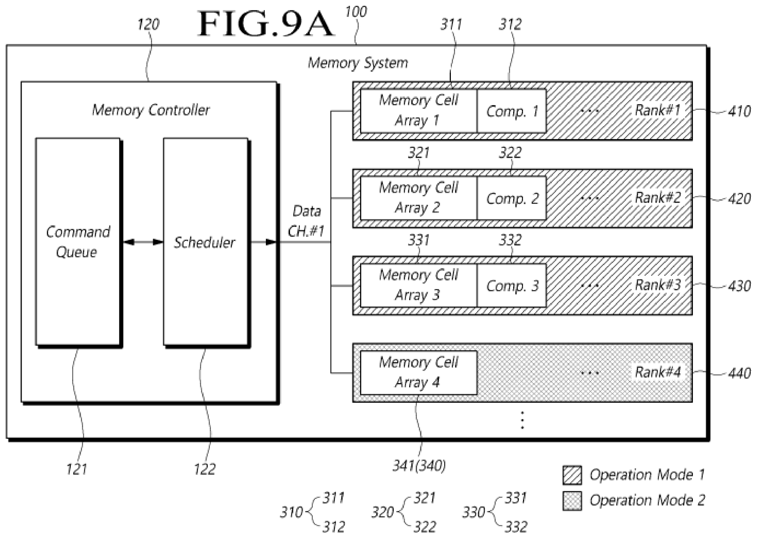

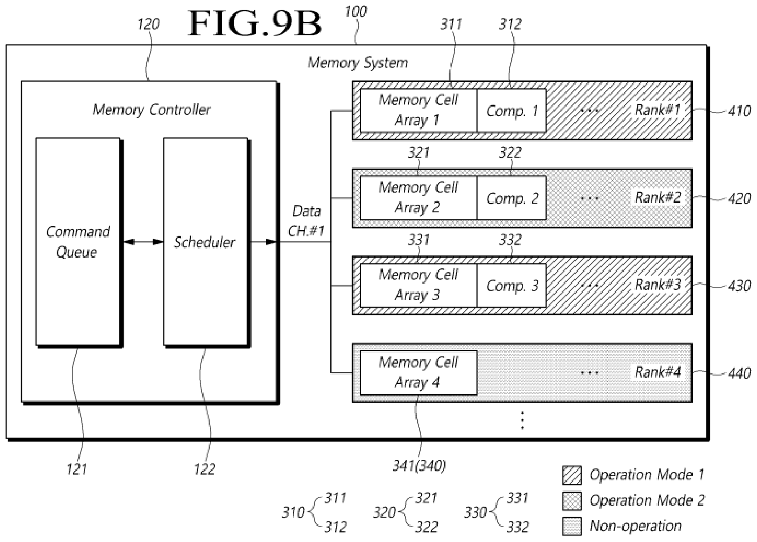

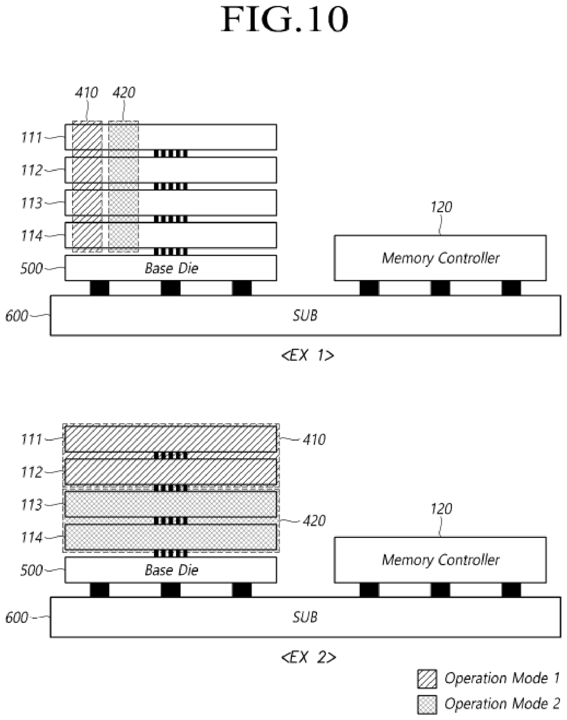

FIG. 9A, FIG. 9B and FIG. 10 are diagrams illustrating examples of operating schemes for various types of memory systems 100 based on some embodiments of the disclosed technology.

Referring to FIG. 9A, an example of a case where a rank 400 that includes a computational logic circuit and a rank 400 that does not include a computational logic circuit are included in a memory system 100 is illustrated.

For example, a first rank 410, a second rank 420, a third rank 430 and a fourth rank 440 may share a first data channel. The first rank 410 may include a first memory cell array 311 and a first computational logic circuit 312. The second rank 420 may include a second memory cell array 321 and a second computational logic circuit 322. The third rank 430 may include a third memory cell array 331 and a third computational logic circuit 332. The fourth rank 440 may include a fourth memory cell array 341. The fourth rank 440 may not include a computational logic circuit.

Ranks 400 that share a first data channel may include a rank 400 that includes a computational logic circuit and a rank 400 that does not include a computational logic circuit. The number of ranks 400 that include computational logic circuits and the number of ranks 400 that do not include computational logic circuits may be different from each other.

For example, among ranks 400 that share a first data channel, the number of ranks 400 that include computational logic circuits may be greater than the number of ranks 400 that do not include computational logic circuits. In some implementations, the number of ranks 400 that include computational logic circuits may be smaller than the number of ranks 400 that do not include computational logic circuits.

Based on commands waiting for ranks 400 that share a first data channel, the memory controller 120 may set operation modes of the respective ranks 400 in each operation period.

For example, as illustrated in FIG. 9A, the first rank 410, the second rank 420 and the third rank 430 may operate according to a first operation mode. The fourth rank 440 may operate according to a second operation mode.

The memory controller 120 may control at least one of ranks 400 including computational logic circuits to operate according to the second operation mode.

For example, referring to FIG. 9B, the first rank 410 and the third rank 430 may operate according to the first operation mode. During a corresponding period, the second rank 420 may operate according to the second operation mode. Because the second rank 420 operates according to the second operation mode, the fourth rank 440 may not operate during the corresponding period.

The fourth rank 440 may operate in the second operation mode during a period in which the first rank 410, the second rank 420 and the third rank 430 sharing the first data channel do not operate in the second operation mode. The fourth rank 440 may be in an idle state during a period in which at least one of the first rank 410, the second rank 420 and the third rank 430 sharing the first data channel operates in the second operating mode. In some implementations, during a period in which at least one of the first rank 410, the second rank 420 and the third rank 430 operates in the second operation mode, the fourth rank 440 may perform a refresh operation.

A memory device 110 that includes a computational logic circuit and a memory device 110 that does not include a computational logic circuit may constitute a memory system 100 so that the operational performance of the memory system 100 may be improved while efficiently controlling a computational operation and a general memory operation. Even in this case, the operational performance of the memory system 100 may be improved while reducing delay of a computational operation and a general memory operation through scheduling by the memory controller 120.

Scheduling control based on commands waiting for respective ranks 400 may be applied to various types of memory systems 100, and may also be applied to, for example, a case where a plurality of memory devices 100 are stacked to constitute a rank 400.

For example, referring to FIG. 10, a plurality of memory devices 111, 112, 113 and 114 may be stacked on a substrate 600. The substrate 600 may include, for example, silicon, and an intermediate substrate may be further disposed to facilitate wiring connection between the substrate 600 and memory devices 110. Such an intermediate substrate may be referred to as an interposer.

A memory controller 120 may be disposed on the substrate 600. A plurality of memory devices 110 may be stacked on a base die 500. The base die 500 may be referred to as a logic circuit die, and various circuits for the operation of the memory devices 110 may be disposed therein. The base die 500 may be controlled according to a command from the memory controller 120, and the memory devices 110 on the base die 500 may operate.

A first memory device 111, a second memory device 112, a third memory device 113 and a fourth memory device 114 may be disposed by being stacked on the base die 500.

Banks included in the first memory device 111, the second memory device 112, the third memory device 113 and the fourth memory device 114 may constitute ranks 400 in various ways.

In some implementations, as shown in the example illustrated in <EX 1> of FIG. 10, a first group of the first memory device 111, a first group of the second memory device 112, a first group of the third memory device 113 and a first group of the fourth memory device 114 may constitute a first rank 410. A second group of the first memory device 111, a second group of the second memory device 112, a second group of the third memory device 113 and a second group of the fourth memory device 114 may constitute a second rank 420.

During at least a part of a period in which the first rank 410 operates according to a first operating mode, the second rank 420 may operate according to a second operating mode.

In some implementations, as shown in the example illustrated in <EX 2> of FIG. 10, at least a part of the first memory device 111 and at least a part of the second memory device 112 may constitute a first rank 410. At least a part of the third memory device 113 and at least a part of the fourth memory device 114 may constitute a second rank 420. During a period in which the first rank 410 operates in the first operation mode, the second rank 420 may operate in the second operation mode.

In some implementations, a first rank 410 and a second rank 420 may be configured in various ways depending on the connection structure of the data channel. During at least a part of a period in which some ranks or a part of ranks sharing the data channel performs a computational operation, the other part of the ranks may perform a general memory operation. In this way, it is possible to prevent or reduce delays in the general memory operation of the memory system 100 while still providing a computational function within the memory system 100.

A memory device according to embodiments of the disclosure may comprise a first rank of memory including a plurality of first banks of memory each including a first memory cell array and a first computational logic circuit to perform a computation using the first memory cell array, and a second rank including a plurality of second banks each including a second memory cell array and a second computational logic circuit to perform a computation using the second memory cell array, wherein the first rank and the second rank share a data channel, and, during a first period in which the first computational logic circuit included in the first rank operates, a program operation or a read operation on the second memory cell array is performed without utilizing the second computational logic circuit included in the second rank.

During a second period after the first period, at least one of the first computational logic circuit included in the first rank or the second computational logic circuit included in the second rank may operate.

During a second period after the first period, the program operation or the read operation on the first memory cell array included in the first rank may be performed.

During the second period, the second computational logic circuit included in the second rank may operate.

A refresh operation on the first rank may be performed after the computation of the first computational logic circuit is completed.

A refresh operation on the second rank may be performed after the program operation or the read operation on the second rank is completed.

During a second period after the first period, a refresh operation on the first rank and the second rank may be performed, wherein a length of the second period is different from a length of the first period.

After a command that instructs the computation of the first computational logic circuit is transmitted through the data channel, a command that instructs the program operation or the read operation on the second memory cell array may be transmitted.

The memory device may further comprise a third rank including a plurality of third banks each including a third memory cell array and a third computational logic circuit to perform a computation using the third memory cell array, and a fourth rank including a plurality of fourth banks each including a fourth memory cell array and a fourth computational logic circuit to perform a computation using the fourth memory cell array, and sharing a data channel with the third rank, wherein during the first period, the third computational logic circuit included in the third rank and the fourth computational logic circuit included in the fourth rank operate.

During a second period after the first period, the first computational logic circuit and the second computational logic circuit may operate, and one of the third computational logic circuit and the fourth computational logic circuit may operate and the other may not operate.

The memory device according to embodiments of the disclosure may comprise a first memory chip including a plurality of first banks each including a first memory cell array and a first computational logic circuit to perform a computation using the first memory cell array, and a second memory chip including a plurality of second banks each including a second memory cell array and a second computational logic circuit to perform a computational using the second memory cell array, wherein during a first period, the first computational logic circuit included in a first group of the plurality of first banks and the second computational logic circuit included in a first group of the plurality of second banks operate, and the first computational logic circuit included in a second group of the plurality of first banks and the second computational logic circuit included in a second group of the plurality of second banks do not operate.

During the first period, a program operation or a read operation may be performed on at least a part of the second group of the plurality of first banks or the second group of the plurality of second banks.

During a second period after the first period, the first computational logic circuit included in the second group of the plurality of first banks and the second computational logic circuit included in the second group of the plurality of second banks may operate, and during the second period, the first computational logic circuit included in the first group of the plurality of first banks and the second computational logic circuit included in the first group of the plurality of second banks may not operate.

During the first period, a refresh operation may be performed on the first group of the plurality of first banks and the first group of the plurality of second banks.

During a third period after the second period, a refresh operation may be performed on at least a part of the plurality of first banks or at least a part of the plurality of second banks, wherein a length of the third period is different from a length of the second period.

A period in which commands for the first group of the plurality of first banks and the first group of the plurality of second banks are transmitted may be different from a period in which commands for the second group of the plurality of first banks and the second group of the plurality of second banks are transmitted.

The first group of the plurality of first banks and the first group of the plurality of second banks may be included in a first rank, and the second group of the plurality of first banks and the second group of the plurality of second banks may be included in a second rank.

The first rank and the second rank may share a data channel.

The first memory chip and the second memory chip may be stacked.

A memory device according to embodiments of the disclosure may comprise a first memory chip including a plurality of first banks each including a first memory cell array and a first computational logic circuit to perform a computation using the first memory cell array, and a second memory chip including a plurality of second banks each including a second memory cell array, wherein during at least a part of a first period in which the first computational logic circuit included in a first group of the plurality of first banks operates, a program operation or a read operation is performed on a first group of the plurality of second banks.

During a second period after the first period, a program operation or a read operation may be performed on the first group of the plurality of first banks, and the first group of the plurality of second banks may be in an idle state.

During at least a part of a period in which the first computational logic circuit included in the first group of the plurality of first banks may not operate, the first group of the plurality of second banks may be in an idle state.

The first group of the plurality of first banks may share a data channel with the first group of the plurality of second banks.

During the first period, a program operation or a read operation may be performed on a second group of the plurality of first banks.

The second group of the plurality of first banks may not share a data channel with the first group of the plurality of first banks and the first group of the plurality of second banks.

During the first period, a refresh operation may be performed on the first group of the plurality of first banks.

During a second period after the first period, a refresh operation may be performed on the first group of the plurality of first banks or the first group of the plurality of second banks, and a length of the second period may be different from a length of the first period.

During the first period, a period in which commands for the first group of the plurality of first banks are received may be different from a period in which commands for the first group of the plurality of second banks are received.

Only a few embodiments and examples are described. Enhancements and variations of the disclosed embodiments and other embodiments can be made based on what is described and illustrated in this patent document.

## Claims

1. A memory system comprising:
a memory device including a plurality of ranks, each of the plurality of ranks including one or more banks including a memory cell array of memory cells to store data and a computational logic circuit to perform data processing; and
a memory controller configured to control operations of the plurality of ranks based on a command in a command queue for each of the plurality of ranks, wherein, during at least a part of a first period in which, among N ranks (N is an integer satisfying N ≥ 2) sharing a data channel, P ranks (P is an integer satisfying N > P ≥ 1) operate in response to a first command, at least one of N-P ranks performs an operation in response to a second command without utilizing the computational logic circuit.

2. The memory system according to claim 1, wherein the memory controller is configured to, when there is at least one second command in the command queue for at least one of the N ranks before the first period, to control at least one of the N-P ranks to operate in response to the second command during at least a part of the first period.

3. The memory system according to claim 1, wherein the memory controller is configured to, when there is no second command in the command queue for the N ranks, to control all of the N ranks to operate in response to the first command during a second period after the first period.

4. The memory system according to claim 1, wherein the memory controller controls Q ranks (Q is an integer satisfying N > Q ≥ 1) among the N ranks to operate in response to the first command during a second period after the first period, and controls at least one of N - Q ranks to operate in response to the second command during at least a part of the second period.

5. The memory system according to claim 4, wherein a rank that operates in response to the second command during the second period is different from a rank that operates in response to the second command during the first period.

6. The memory system according to claim 4, wherein at least one of the P ranks that operate in response to the first command during the first period operates in response to the second command during the second period.

7. The memory system according to claim 1, wherein the memory controller assigns, in each cycle based on a length of the first period, a rank among the N ranks that performs an operation in response to the first command and a rank among the N ranks that performs an operation in response to the second command.

8. The memory system according to claim 1, wherein the memory controller assigns a rank that operates in response to the first command, based on a waiting time of the first command waiting in the command queue for each of the N ranks.

9. The memory system according to claim 1, wherein the memory controller performs a refresh operation on at least one of ranks that operate in response to the second command during the first period.

10. The memory system according to claim 1, wherein, when the operations of ranks that operate in response to the first command during the first period are completed, the memory controller performs a refresh operation on all of the ranks on which operations in response to the first command are performed.

11. The memory system according to claim 1, wherein the memory controller performs a refresh operation on at least a part of the N ranks during a second period after the first period, wherein a length of the second period is different from a length of the first period.

12. The memory system according to claim 1, wherein the memory controller transmits the first command to the P ranks that operate in response to the first command during the first period, and subsequently transmits the second command to at least one of the N-P ranks.

13. The memory system according to claim 1, wherein during a period other than a period in which the first command is transmitted through the data channel shared by the N ranks during the first period, the second command and data are transmitted and received in response to the second command.

14. The memory system according to claim 1, wherein
during the first period, for a first rank and a second rank that share a first data channel, the first rank operates in response to the first command, and the second rank operates in response to the second command, and
during the first period, a third rank and a fourth rank that share a second data channel operate in response to the first command.

15. The memory system according to claim 1, wherein an operation in response to the first command includes an operation of the computational logic circuit.

16. A memory controller comprising:
at least one command queue configured to store a first command and a second command for each of a plurality of ranks, wherein each rank includes one or more banks and each bank includes one or more memory cell arrays of memory cells to store data; and
a scheduler configured to: schedule a command to be performed by each of the plurality of ranks during a preset operation period, based on a number of first commands and a number of second commands; and, when there is at least one second commands, while an operation in response to the first command is being performed by one part of the plurality of ranks, schedule an operation to be performed by another part of the plurality of ranks in response to the second command.

17. The memory controller according to claim 16,
wherein based on the number of first commands and the number of second commands stored in the at least one command queue during a first period, the scheduler assigns a rank that operates in response to the first command and a rank that operates in response to the second command during a second period after the first period.

18. The memory controller according to claim 16,
wherein the scheduler assigns a first group of the plurality of ranks to operate in response to the first command during a first period, and assigns at least one rank included in the first group to operate in response to the second command during a second period after the first period.

19. The memory controller according to claim 18,
wherein the scheduler assigns a second group of the plurality of ranks to operate in response to the second command during the first period, wherein ranks included in the second group do not share a data channel with each other.

20. The memory controller according to claim 16,
wherein at least one of ranks that perform an operation in response to the first command among the plurality of ranks shares a data channel with at least one of ranks that perform an operation in response to the second command.
